# EUROPEAN PATENT SPECIFICATION

(11) **EP 3 918 046 B1**
(45) Date of publication and mention of the grant of the patent: **08.11.2023**
(21) Application number: 19755509.7
(22) Date of filing: 13.08.2019
(51) Int. Cl.: C12C 11/11, C12G 3/00, C12H 1/044, C12H 1/07

(54) **REFINED FERMENTED BEVERAGES**
RAFFINIERTE FERMENTIERTE GETRÄNKE
BOISSONS FERMENTÉES RAFFINÉES

(30) Priority: 31.07.2019 US 201962880827 P
(43) Date of publication of application: 08.12.2021
(60) Divisional application: 23201842.4
(73) Proprietor: MARK ANTHONY INTERNATIONAL SRL, St. Michael (BB)
(72) Inventor: FOX, David, G., Chicago, IL 60625 (US); VIEIRA, Anthony, C., East Dennis, MA 02641 (US); MATTSON, Jacob, M., Jackson, NE 68743 (US)
(74) Representative: Kuhnen & Wacker Patent- und Rechtsanwaltsbüro PartG mbB
(86) International application number: PCT/US2019/046308
(87) International publication number: WO 2020/036932

(56) References cited:
- WO-A1-96/12788
- CN-A- 1 616 635
- CN-A- 1 616 635
- CN-A- 101 276 225
- CN-B- 101 705 165
- DE-A1- 2 437 404
- PT-A- 105 008
- US-A1- 2003 232 108
- US-A1- 2008 292 748
- US-A1- 2008 317 930
- US-A1- 2014 127 354
- US-A1- 2014 127 366
- US-A1- 2016 288 022
- P. Dostálek ET AL: "Immunochemical determination of gluten in malts and beers", Food Additives and Contaminants, vol. 23, no. 11, 1 November 2006 (2006-11-01), pages 1074-1078, XP055712403, GB ISSN: 0265-203X, DOI: 10.1080/02652030600740637
- Thomas Barnes: "The Complete Beer Fault Guide v. 1.4", , 1 January 2011 (2011-01-01), XP055170598, Retrieved from the Internet: URL:http://www.carolinabrewmasters.com/PDF /Complete_Beer_Fault_Guide.pdf [retrieved on 2015-02-18]
- N. Coote ET AL: "THE CONTENT OF SOME ORGANIC ACIDS IN BEER AND OTHER FERMENTED MEDIA", JOURNAL OF THE INSTITUTE OF BREWING., vol. 80, no. 5, 10 September 1974 (1974-09-10), pages 474-483, XP055712294, GB ISSN: 0046-9750, DOI: 10.1002/j.2050-0416.1974.tb06797.x

## Description

### Field of the Invention

The present invention relates to the production of a refined beer.

### Background of the Invention

Traditional fermented beverage (FB) making processes undergo several treatment steps to convert malted barley and other grains into a sugar extract that can be fermented to create a drinkable product. One example of an FB is a neutral malt base (NMB), an ideally colorless, flavorless, and odorless solution that can be further processed to formulate malt beverages of varying flavors. Such processes are described in detail in U.S. Patent Nos. 4,440,795, 5,294,450, 5,618,572, and 7,008,652, as well as U.S. Patent Publication 2014/0127354. However, an NMB is but one example of an FB, and other examples of FBs include, but are not limited to: beers, wines, spirits, liqueurs, meads, ciders, rice wines, and fermented teas.

Beverages based on barley have been historically produced in a malt house, converting barley to malted barley, and a brewhouse, converting malt into a malt extract also known as a wort. Malting involves steeping of barley kernels to promote germination, followed by kiln drying at elevated temperatures. A brewhouse-centered process, well known to persons skilled in the art, treats the malt to break down the starches within the malt into smaller sugars consisting mostly of mono-, di-, and trisaccharides to form a wort. The wort can then be further boiled and blended in specific percentages with other sugars and added hops to produce the final fermentation substrate that can be combined with yeast to produce ethyl alcohol. After fermentation is completed, the fermented product can then be filtered, treated, and decolorized to produce an NMB.

Production of a neutral-tasting alcoholic beverage utilizing a hopped wort has been described in Canadian Patent No. 1,034,064. The process as a starting material a low kiln malt with a soluble protein content of between 30% and 37% by weight, a moisture content of 5% to 6% and a diastase value of 150 to 240. This low kiln malt is then mixed with water at between 66°C and 77°C, to form a mash and maintained in that temperature range to produce a wort. The thereby produced wort is then boiled for 10-40 minutes, mixed with a carbohydrate adjunct and a supplementary nitrogen source and fermented with brewer's yeast. U.S. Patent No. 4,495,204, also discloses production of a neutral-tasting alcoholic beverage prepared by mashing a well modified standard brewers malt, which is mixed in an amount of from 2% to 20% with a fermentable carbohydrate and water at a temperature of between 80°C and 90°C in an amount from 80% to 98%, to obtain a fermentable solution, which is then cooled, pitched with brewer's yeast, and fermented.

After post-fermentation processing has been completed, the consumable NMB product often has an acidic pH. The acidity of an NMB can be traced back to the mashing process of the malt that converts the starches into fermentable sugars. Typically, milled grain is mixed with hot water in a mash tun to create a cereal mash. At the high temperatures at which this process occurs, insoluble calcium salts can form, contributing to the decrease of the pH in the mash. (*See* South, J.B., "Variation in pH and Lactate Levels in Malts" (1996) J. Inst. Brew. 102:155-159.) The resulting worts contain a pH ranging from about 5.4 to about 5.8, depending on the malt type and calcium content. Similarly, organic acids, particularly lactic acid, which are also found in the malts, can lower the pH of the wort even further. Moreover, organic acids can also form in the batch or continuous fermentation process. (*See* Whiting, GC "Organic Acid Metabolism of Yeasts During Fermentation of Alcoholic Beverages - A Review" (1976) J. Inst. Brew.82:84-92).

Conventional techniques used for processing an FB, including an NMB, generally do not affect the removal of organic acids, such as acetic acid, citric acid, lactic acid, propionic acid, or tartaric acid, which are naturally produced during fermentation. As a result, organic acids can often be found in the FB or NMB that is ultimately consumed.

Fermented beverages and methods for manufacturing the same are known to the skilled person e.g., from the publications US 2014/127 366 A1, US 2016/288 022 A1 and US 2008/317 930 A1.

### Summary of the Invention

The subject-matter of the present invention is defined in the independent claims. Advantageous embodiments of the present invention are subject-matter of the dependent claims. The present invention provides a refined beer and discloses methods and systems for making a refined FB having a reduced or negligible level of acidic congeners relative to an FB or NMB that is processed by conventional means after fermentation. Organic acids that are retained in consumable FBs, including in NMBs, defined herein as acidic congeners can affect the organoleptic properties of the fermented beverage, and particularly of an NMB. Moreover, the present invention provides a use of the refined beer according to the invention to produce a flavored malt beverage.

According to the present invention, one or more of the acidic congeners may be organic acidic congeners that impart a negative effect on the aroma and/or taste of an FB. According to the present invention, reducing or removing one or more of the organic acidic congeners may improve the aroma and/or taste of the resulting FB.

According to the present invention, untreated fermentation products or FBs comprising acidic congeners, preferably organic acidic congeners, may be produced from any fermentable carbohydrate source selected from the group consisting of a cereal grain, a fruit, honey, a syrup or sap, a starchy vegetable, a sugar, and any mixture or combination thereof.

According to the present invention, an untreated FB or un-neutralized FB can refer to an FB prior to the addition of an alkaline treating agent in an amount sufficient to convert at least a portion of the acidic congener contained within the FB to the corresponding salt, while a treated FB or neutralized FB can refer to the FB that is produced after the addition of the alkaline treating agent.

According to the present invention, the fermentable carbohydrate source may be a cereal grain selected from the group consisting of barley, wheat, rye, millet, rice, sorghum, corn, and any mixture or combination thereof. According to the present invention, the cereal grain may be a gluten-free cereal grain, and can be selected from the group consisting of millet, rice, sorghum, corn, and any mixture or combination thereof. According to the present invention, the fermentable carbohydrate source may naturally have a gluten concentration in the range of 0 ppm to 20 ppm. According to the present invention, the fermentable carbohydrate source may be modified to either reduce or remove gluten until the concentration of gluten within the fermentable carbohydrate source is in the range of 0 ppm to 20 ppm. According to the present invention, the gluten concentration in a natural fermentable carbohydrate source or a modified fermentable carbohydrate source can be about 0 ppm, or at least about 1 ppm, 2 ppm, 3 ppm, 4 ppm, 5 ppm, 10 ppm, or 15 ppm, up to at least about 20 ppm.

According to the present invention, the cereal grains used to produce refined FBs according to methods and systems of the present invention can be germinated by a malting process to form a malt. According to the present invention, the malt can be further mashed to form a wort. According to the present invention, the wort can be concentrated to form an extract. However, according to the present invention, cereal grains used as a fermentable carbohydrate source do not have to undergo a malting process. Thus, according to the present invention, a cereal grain in any form can be utilized as a fermentable carbohydrate source to produce an untreated FB.

According to the present invention, the fermentable carbohydrate source may be a sugar that can be fermented completely, selected from the group consisting of L- and/or D-glucose, maltose, fructose, sucrose, invert sugar, Belgian candi sugar, brown sugar, golden syrup, maple sugar, raw sugar, and any mixture or combination thereof. According to the present invention, the fermentable carbohydrate source may be a sugar mixture in which not all of the sugars within the mixture can be fermented, selected from the group consisting of turbinado sugar, molasses, rice syrup solids, and any mixture or combination thereof. According to the present invention, the sugar can comprise any combination of completely fermentable and partially fermentable sugars described above.

According to the present invention, any untreated fermentation product or FB may be utilized in accordance with one or more of the methods and systems, described below. Non-limiting examples of FBs include, but are not limited to: NMBs; beers; wines; meads; ciders; rice wines; and fermented teas, although one skilled in the art would understand that this list is not exhaustive. According to the present invention, the untreated fermentation product or FB may be any of the FB's defined below in the "definitions" section. According to the present invention, the FB can include one or more flavoring and/or stability agents, including hops, spices, herbs, chocolate, coffee, sweeteners, and others. According to the present invention, the FB may comprise hops or may be substantially free of hops.

According to the present invention, refined FBs, particularly refined NMBs, produced by the methods and systems below may be used to produce flavored malt beverages (FMB) with flavor profiles that may otherwise clash with organic acidic congeners that are commonly and naturally present in untreated FBs produced by conventional methods. According to the present invention, the organic acidic congeners may include lactic acid, tartaric acid, propionic acid, butyric acid, and/or acetic acid.

In an aspect, a method is provided for producing a refined FB having a reduced or negligible level of an acidic congener, comprising the steps of (a) treating an FB by adding an alkaline treating agent to the FB to neutralize an acidic congener present in the FB, and (b) removing at least a portion of the neutralized acidic congener from the treated FB to produce a refined FB.

In another aspect, a method is provided for producing a refined FB having reduced or negligible levels of organic acidic congeners, comprising the steps of: (a) treating an FB comprising one or more organic acidic congeners by adding an alkaline treating agent to the FB to neutralize at least a portion of the one or more organic acidic congeners present in the FB, and (b) separating at least a portion of the neutralized organic acidic congeners from the treated FB to produce a refined FB. Substantially all of the organic acidic congeners in the FB may be neutralized. Substantially all of the neutralized organic acidic congeners may be separated from the treated FB. All of the organic acidic congeners in the FB may be neutralized and/or all of the neutralized organic acidic congeners may be separated from the treated FB.

In another aspect, a method is disclosed for producing a refined FB having reduced or negligible levels of organic acidic congeners, comprising the steps of: (a) providing an FB comprising at least one organic acidic congener; (b) neutralizing at least a portion of the at least one organic acidic congener by titrating or adding into the FB a sufficient amount of an alkaline treating agent to convert the at least one acidic congener into an organic salt, to form a neutralized FB; and (c) filtering out at least a portion of the organic salt, thereby producing a refined FB. Substantially all of the organic acidic congeners may be neutralized to an organic salt. Substantially all of the organic salt may be filtered from the neutralized FB. All of the organic acidic congeners in the FB may be neutralized to an organic salt and/or all of the organic salts may be separated from the treated FB.

In another aspect, a method is disclosed for producing a refined FB in which all, or substantially all, of the organic acidic congeners are neutralized and removed from an FB solution, comprising the steps of: (a) providing an FB solution comprising at least one organic acidic congener; (b) treating the FB solution by neutralizing the at least one organic acidic congener, by adding into the FB solution a sufficient amount of an alkaline treating agent to convert some, all, or substantially all, of the at least one organic acidic congener into a salt of the organic acid congener; and (c) separating some portion, all, or substantially all of the salt of the organic acid congener from the treated FB solution, thereby producing a refined FB. The sufficient amount of alkaline treating agent may neutralize the FB solution to a pH of or within the range of at least about 5.5, which can be a pH of at least any one of about 5.7, 5.9, or 6.1, and up to about 6.5, which can be a pH of up to about any one of 6.7, 6.5, 6.3 or 6.1. Useful in combination with any one or more of the above aspects and embodiments, the alkaline treating agent may comprise an alkali (group I) or alkaline earth (group II) metal hydroxide, preferably sodium hydroxide. Useful in combination with any one or more of the above aspects or embodiments, the alkaline treating agent may comprise up to about 50% food grade sodium bicarbonate by volume. Useful in combination with any one or more of the above aspects and embodiments, the at least one organic acidic congener may comprise one or more organic acids. Useful in combination with any one or more of the above aspects and embodiments, the FB solution may be a bright beer. Useful in combination with any one or more of the above aspects and embodiments, the step of treating the FB solution may comprise the steps of: (i) providing a contained quantity of the FB solution comprising the at least one organic acidic congener; (ii) titrating a sample of the contained quantity of FB solution with an alkaline treating agent sufficient to neutralize the at least one organic acidic congener in the sample to a salt form; and (iii) adding a quantity of an alkaline treating agent to the contained quantity of FB solution to treat the FB solution by neutralizing the at least one organic acidic congener in the contained quantity to a salt form, wherein the quantity of the added alkaline treating agent is determined based on the titration of the sample. The alkaline treating agent used to treat the contained quantity of FB solution may either be the same alkaline treating agent used to titrate the sample, or may be a different alkaline treating agent in a stoichiometric-equivalent quantity. Useful in combination with any one or more of the above aspects and embodiments, the step of neutralizing the at least one organic acidic congener may be performed using an in-line, caustic dosing system comprising: (a) a means for supplying the FB to the caustic dosing system; (b) at least one pH meter for detecting the pH of the FB; (c) a container for the alkaline treating agent; (d) a delivery means for providing liquid communication of the alkaline treating agent between the alkaline treating container and the supplied FB; and (e) a central programmable logic controller in communication with the at least one pH meter and the alkaline treating agent delivery means. Using the in-line caustic dosing system, the at least one organic acidic congener in the FB solution may be neutralized according to the following steps: (i) introducing a stream of the FB into the in-line caustic dosing system; (ii) detecting the pH of the FB stream using the at least one pH meter; (iii) determining a stoichiometric quantity of the alkaline treating agent necessary to neutralize the one or more organic acidic congeners within the FB stream, using the central programmable logic controller; and (iv) dispensing the stoichiometric quantity of the alkaline treating agent from the alkaline treating agent container into the FB stream using the delivery means. The in-line caustic dosing system may comprise a pH meter upstream of the delivery of the alkaline treating agent and a pH meter downstream of the delivery of the alkaline treating agent into the FB stream.

In another aspect, a method is disclosed for producing a refined FB having reduced or negligible levels of organic acidic congeners, comprising the steps of: (a) providing a FB solution comprising at least one organic acidic congener; (b) treating the FB solution by neutralizing the at least one organic acidic congener, by adding into the FB solution a sufficient amount of an alkaline treating agent to convert all, or substantially all, of the at least one organic acidic congener into a salt of the organic acid congener; and (c) separating the salt of the organic acid congener from the treated FB solution, thereby producing a refined FB. The sufficient amount of alkaline treating agent may neutralize the FB solution to a pH of or within the range of at least about 5.5, including a pH of at least about 5.7, 5.9, or 6.1, and up to about 6.5. Useful in combination with any one or more of the above aspects or embodiments, the alkaline treating agent may comprise a Group I or Group II metal hydroxide, particularly sodium hydroxide. Useful in combination with any one or more of the above embodiments, the alkaline treating agent may comprise up to about 50% food grade sodium bicarbonate by volume. Useful in combination with any one or more of the above aspects and embodiments, the at least one organic acidic congener may comprise one or more organic acids. Useful in combination with any one or more of the above aspects and embodiments, the FB solution may be a bright beer. Useful in combination with any one or more of the above aspects and embodiments, the step of separating may comprise filtering the salt of the organic acid congener from the treated FB. Useful in combination with any one or more of the above aspects and embodiments, the step of separating may consist of filtering the salt of the organic acid congener from the neutralized FB. Useful in combination with any one or more of the above aspects and embodiments, the FB may comprise at least about 10% and up to about 20%, by volume, ethyl alcohol, and the at least one organic acidic congener may comprise acetic acid. Useful in combination with any one or more of the above aspects and embodiments, the step of treating the FB solution may comprise the steps of (i) providing a contained quantity of the FB solution comprising the at least one organic acidic congener; (ii) titrating a sample of the contained quantity of FB solution with an alkaline treating agent sufficient to neutralize the at least one organic acidic congener in the sample to a salt form; and (iii) adding a quantity of an alkaline treating agent to the contained quantity of FB solution to treat the FB solution by neutralizing the at least one organic acidic congener in the contained quantity to a salt form, wherein the quantity of the added alkaline treating agent is determined based on the titration of the sample The alkaline treating agent used to treat the contained quantity of FB solution may either be the same alkaline treating agent used to titrate the sample, or may be a different alkaline treating agent in a stoichiometric-equivalent quantity. Useful in combination with any one or more of the above aspects and embodiments, the step of neutralizing the at least one organic acidic congener may be performed using an in-line, caustic dosing system comprising: (a) a means for supplying the FB to the caustic dosing system; (b) at least one pH meter for detecting the pH of the FB; (c) a container for the alkaline treating agent; (d) a delivery means for providing liquid communication of the alkaline treating agent between the alkaline treating container and the supplied FB; and (e) a central programmable logic controller in communication with the at least one pH meter and the alkaline treating agent delivery means. Useful in combination with any one or more of the above aspects and embodiments, using the in-line caustic dosing system, the at least one organic acidic congener in the FB solution may be neutralized according to the following steps: (i) introducing a stream of the FB into the in-line caustic dosing system; (ii) detecting the pH of the FB stream using the at least one pH meter; (iii) determining a stoichiometric quantity of the alkaline treating agent necessary to neutralize the one or more organic acidic congeners within the FB stream, using the central programmable logic controller; and (iv) dispensing the stoichiometric quantity of the alkaline treating agent from the alkaline treating agent container into the FB stream using the delivery means. The in-line caustic dosing system may comprise a pH meter upstream of the delivery of the alkaline treating agent and a pH meter downstream of the delivery of the alkaline treating agent into the FB stream. Systems for neutralizing and removing organic acidic congeners from a FB, including in-line caustic dosing systems, are described in further detail below.

In another aspect, a method is disclosed for producing a refined FB having reduced or negligible levels of acidic congeners, comprising the steps of: (a) providing an FB solution comprising an acidic congener; (b) treating the FB solution by adding an alkaline treating agent to the fermented beverage solution to neutralize at least a portion of the acidic congener; and (c) removing the neutralized acidic congener from the treated FB solution, thereby producing the refined FB. Refined FB has a reduced or negligible concentration of the acidic congener, preferably acetic acid, relative to the FB solution. Useful in combination with any one or more of the above aspects and embodiments, the neutralized acidic congener may be a salt. Useful in combination with any one or more of the above aspects and embodiments, the acidic congener may be an organic acid. The acidic congener may be acetic acid. Useful in combination with any one or more of the above aspects and embodiments, the step of removing the neutralized acidic congener may comprise filtering the neutralized acidic congener from the treated fermented beverage. Useful in combination with any one or more of the above aspects and embodiments, the step of removing the neutralized acidic congener may consist of filtering the neutralized acidic congener from the treated fermented beverage. Useful in combination with any one or more of the above aspects and embodiments, the addition of the alkaline treating agent may raise the pH of the fermented beverage solution to at least about 5.5, and up to about 8.5. Useful in combination with any one or more of the above aspects and embodiments, the alkaline treating agent may either comprise an alkali metal hydroxide or alkaline earth metal hydroxide, preferably sodium hydroxide, or the alkaline treating agent may comprise a weak base, preferably sodium acetate. Useful in combination with any one or more of the above aspects and embodiments, the refined FB may have a pH in the range of about 5.8 to about 6.5. Useful in combination with any one or more of the above aspects and embodiments, the refined FB may comprise at least about 10% and up to about 20%, by volume, ethyl alcohol. Useful in combination with any one or more of the above aspects and embodiments, the refined FB may be flavorless.

A refined FB produced by any of the above methods may retain a portion of the acidic congeners from the untreated FB. The refined FB produced by any of the above methods may retain none, or essentially none, of the acidic congeners from the untreated FB.

According to the present invention, the refined FB produced by any of the above methods is a beer. The refined FB produced by any of the above methods may be an NMB.According to the present invention, the refined FB produced by any of the above methods may be naturally gluten-free, gluten-reduced, or gluten-removed such that the concentration of gluten is in a range of about 0 ppm to about 20 ppm of gluten, preferably 0 ppm of gluten. According to the present invention, the refined FB produced by any of the above methods may be substantially free of hops. According to the present invention, the refined FB produced by any of the above methods may comprise no hops. According to the present invention, the refined FB produced by any of the above methods may be substantially free of malted barley. According to the present invention, the refined FB produced by any of the above methods may comprise no malted barley.

Using a refined NMB as an example, in an aspect, a method is disclosed for producing a refined NMB having reduced or negligible levels of acidic congeners, comprising the steps of: (a) providing a bright beer comprising at least one acidic congener; (b) titrating or adding into the bright beer an alkaline treating agent to convert at least a portion of the at least one acidic congener into a salt, to form a neutralized bright beer; and (c) separating some or all of the salt from the neutralized bright beer, thereby producing a refined NMB. All of the at least one acidic congener may be neutralized. All of the salt may be separated from the neutralized bright beer. The acidic congener may be an organic acidic congener. The separation of the salt from the neutralized bright beer may comprise filtration. The separation of the salt from the neutralized bright beer may consist of filtration. Any of the other refined FBs described above or in the "definitions" section below can be produced simply by substituting in the desired untreated FB for the bright beer in step (a), above, and performing the same steps of neutralizing at least a portion of the at least one acidic congener to form a salt and separating out some or all of the salt.

A refined FB is an FB in which a portion or all of one or more acidic congeners within an FB have been neutralized by an alkaline treating agent to form a salt, and a portion or all of the salt is subsequently removed from the neutralized FB to produce the refined FB. This application is related to and claims priority of U.S. Non-Provisional Application No. 16/101,797 and U.S. Provisional Application No. 62/880,827, both of which have described and claimed the same process for neutralizing some or all of acidic compounds within an FB to form a salt, followed by removing a portion or all the formed salts to form a clarified FB. However, "clarified" typically is the general term within the brewing industry to describe an FB produced by any process in which solids are removed from a wort, beer, or other FB. Thus, a refined FB may also be described as a clarified FB, such as when the salts are removed using a separation technique or apparatus that also removes solid particulates, or when an FB that is first clarified with regard to solid material is then subsequently neutralized and refined. Additionally, a refined FB may be formed by removing the salts from the treated or neutralized FB without necessarily removing any or all other solids that are present, thus producing a refined FB that is not a clarified FB. An FB that has been refined, but not clarified, can subsequently be clarified to form a clarified (and refined) FB. Separation apparatuses and techniques used to form refined and clarified FBs are described in further detail, below.

Alternatively, neutralized acidic congeners, organic acidic congeners, and/or their salts can be optionally retained, without subsequently separating, filtering, or otherwise removing them from the neutralized FB. According to an aspect, a method is disclosed for producing a neutralized FB having reduced or negligible levels of organic acidic congeners, comprising the steps of: (a) providing an FB comprising at least one organic acidic congener; and (b) titrating or adding into the FB a sufficient amount of an alkaline treating agent to neutralize at least a portion of the one or more organic acidic congeners present in the FB and form the neutralized FB. Without being limited by a particular theory, it is believed that organic acidic congeners can only be detected by taste when the organic acidic congeners are in their acidic form, whereas organic acidic congeners that have been neutralized have a diminished or negligible effect on taste, even if the neutralized organic acidic congeners and/or their salts are still present within the FB. The effect that acidic congeners have on the taste and smell of FB's is described in more detail, below.

The above methods may produce a refined FB having reduced or negligible levels of acetic acid, which, if present, may impart vinegar-like flavor and odor notes that are often undesired in an FMB. The refined FB may be colorless and may have decreased vinegar-like flavor notes and odors relative to untreated bright beers or FBs. Vinegar-like flavor notes and/or odors within the refined FB may be substantially imperceptible to someone drinking or smelling the beverage. The refined FB may comprise no vinegar-like flavor notes and/or odors. The refined FB may be an NMB.

The alkaline treating agent can comprise any basic compound that is capable of reacting with an organic acidic congener, including both strong and weak bases. The alkaline treating agent may be a caustic comprising at least one Arrhenius base that increases the concentration of hydroxide ions in a solution with water. Non-limiting examples include alkali (Group I) and alkaline earth (Group II) metal hydroxides such as potassium hydroxide, sodium hydroxide, barium hydroxide, cesium hydroxide, strontium, hydroxide, calcium hydroxide, lithium hydroxide, and rubidium hydroxide. The alkaline treating agent may comprise up to about 50% by weight sodium hydroxide. The alkaline treating agent may comprise up to 50% by weight potassium hydroxide.

The alkaline treating agent may comprise a weak base, in which the base and its conjugate acid are present in an equilibrium with each other. The alkaline treating agent may comprise up to 50% by weight sodium bicarbonate.

The alkaline treating agent can comprise one or more caustics, one or more weak bases, and/or a combination of one or more caustics and one or more weak bases.

In an aspect, a method is provided for neutralizing at least one organic acidic congener in an FB solution, which can include a bright beer solution, comprising the steps of: (1) providing a quantity of a stream of FB containing at least one organic acidic congener; (2) introducing a neutralizing quantity of an alkaline treating agent into the FB stream, to adjust the pH of the FB stream into and within a target pH range sufficient to neutralize at least a portion of the organic acidic congeners within the FB stream; (3) detecting the pH of the treated FB stream; and (4) adjusting the neutralizing quantity of the alkaline treating agent based on the detected pH of the treated FB stream, to maintain the pH of the treated FB within the target pH range.

The quantity of the stream of FB may have a mass or volumetric flow rate, and the neutralizing quantity of an alkaline treating agent may have a mass or volumetric flow rate. The mass or volumetric flow rate of the FB stream may be substantially constant. The mass or volumetric flow rate of the FB stream may be detected, and the adjusting of the neutralizing quantity of the alkaline treating agent may be based on the detected pH of the treated FB and the mass or volumetric flow rate of the bright FB.

The step of treating the FB to neutralize an acidic congener present in the FB, may comprise the steps of: (i) providing a batch of the fermented beverage solution comprising the acidic congener; (ii) extracting a sample of the fermented beverage solution from the batch; (iii) titrating the sample with an alkaline treating agent to neutralize at least a portion of the acidic congener within the sample to form a salt; (iv) calculating the amount of the salt formed by the titration of alkaline treating agent into the sample; (v) determining a quantity of alkaline treating agent to add to the batch, based on the titration of alkaline treating agent into the sample; and (vi) adding the determined quantity of alkaline treating agent to the batch to neutralize at least a portion of the acidic congener within the batch and form a salt. The alkaline treating agent used to treat the contained quantity of FB can be the same alkaline treating agent used to titrate the sample, or can be a different alkaline treating agent in a stoichiometric-equivalent quantity.

The step of neutralizing the at least one organic acidic congener may be performed in batch (or continuous batch) system, comprising: (a) container for a quantity of FB comprising an acid congeners; (b) a pH meter for detecting the pH of the contained quantity of FB; (c) a metering means for introducing a controlled amount of an alkaline treating agent into the contained quantity of FB; and (d) a controller, for example a central programmable logic controller, in communication with the pH meter and the metering means. The metering means can be a metering pump or a liquid flow controller.

The step of neutralizing the at least one organic acidic congener may be performed in an in-line, caustic dosing system, comprising: (a) a piping system for FB streams; (b) one or more pH meters for detecting the pH of the FB stream, or one or more pH meters for detecting the pH of the treated FB stream, or both; (c) an alkalinity container for the alkaline treating agent; (d) a metering means for introducing a controlled amount of the alkaline treating agent into the FB stream; and (e) a controller, for example a central programmable logic controller, in communication with the one or more pH meter and the metering means. The metering means can be a metering pump or a liquid flow controller. In some embodiments, the in-line, caustic dosing system further comprises mixing means for homogenizing the alkaline treating agent into the FB stream. The mixing means can comprise an in-line mixer, a retention piping, and in-line mixing vessel, or a recirculation system.

The in-line, caustic dosing system may further comprise a conductivity meter for detecting the electrical conductivity of the FB stream, or the treated FB stream, or both.

The at least one organic acidic congener in the FB may be neutralized within the in-line caustic dosing system according to the steps of (1) introducing the FB stream comprising an organic acid into the in-line caustic dosing system; (2) detecting the pH of the FB stream using a pH meter; (3) determining a neutralizing quantity of the alkaline treating agent sufficient to neutralize the organic acidic congeners within the FB stream, using the controller; and (4) dispensing the neutralizing quantity of the alkaline treating agent from the alkalinity container into the FB stream downstream of the detection by the pH meter using a metering means, to form the treated FB stream. The in-line caustic dosing system can comprise a pH meter for detecting the pH of the FB stream at a position downstream of where the alkaline treating agent is introduced and mixed into the FB stream or for detecting the pH of the treated FB stream, or both. The detected pH of the treated FB stream may be used by the controller to determine the sufficient neutralizing quantity of alkaline treating agent.

Any of the above methods for neutralizing the FB using the in-line caustic dosing system can further comprise the step of detecting the electrical conductivity of the FB stream using the conductivity meter. The detected conductivity of the treated FB stream may be used by the controller to determine the sufficient neutralizing quantity of alkaline treating agent. The detected conductivity and pH of the treated FB stream may both be used by the controller to determine the sufficient neutralizing quantity of alkaline treating agent.

Any of the neutralization methods described above can further include one or more salt removal or separation steps that can be performed after neutralizing the organic acidic congeners within the FB, to remove the salt forms of the organic acid congeners generated during the neutralization. The removal step may comprise a filtering step, and passing the treated FB through a filter to separate and remove the salt forms of the organic acid congeners. Typically, a suitable filter can include a filter or separate device sufficient for the desalination of sea water. Non-limiting examples of the filtration systems for separation of salts from the neutralized FB to form a refined FB may include: ultrafiltration; reverse osmosis filtration; and nanofiltration. The method can also include filtration of the FB prior to neutralizing the organic acidic congeners within the FB, to remove other particulates or filterable congeners. The separation may comprise a separation step in addition to or substituting for filtration, including but not limited to: column distillation; vacuum distillation; multi-stage flash distillation; multiple-effect distillation; vapor-compression distillation; ion exchange chromatography, particularly cation exchange chromatography; gravitation; centrifugation; decantation; freeze-thaw systems; solar evaporation systems; and electrodialysis reversal. Removing at least a portion of the salt forms of the organic acid congeners may form a refined FB.

The salt forms of the organic acid congeners may be separated from the treated FB stream to form a refined FB, without using distillation. Salt forms of the organic acid congeners may be removed from the treated FB stream using filtration only.

In another aspect, a neutralization system for neutralizing and removing organic acidic congeners in an FB is disclosed, to produce a refined FB, comprising: (a) an in-line caustic dosing system configured treat the FB by titrating or adding an alkaline treating agent to the FB to neutralize the organic acid congeners; and (b) at least one separation apparatus configured to separate the neutralized organic acid congeners from the treated FB, thereby producing the refined FB.

In another aspect, the neutralization system can comprise: (a) an in-line caustic dosing system for neutralizing the organic acidic congener in the bright beer stream; and (b) a filter or other device for separating out the salt forms of the organic acidic congeners from the treated FB stream.

Useful in combination with any one or more of the above neutralization systems, the in-line caustic dosing system can comprise: one or more pH meters configured for monitoring the pH of the FB stream, the treated FB stream, or both; a container for an alkaline treating agent; a metering means for the alkaline treating agent; and a central programmable logic controller that is configured to monitor the pH of the FB stream, the treated FB stream, or both, detected by the one or more pH meter, and to control the amount of the alkaline treating agent dispensed from the container by the metering means.

The amount of alkaline treating agent that may be titrated into the FB in any of the methods or systems described above may be the amount sufficient to neutralize at least about 10 percent of the organic acidic congeners that were present in the FB, up to at least about 99.9 percent of the organic acidic congeners that were present in the FB. Enough alkaline treating agent may be titrated into the FB so that all, or substantially all, of the organic acidic congeners that were present within the FB are neutralized. Enough alkaline treating agent may be titrated into the FB so that less than about 99.9 percent of the organic acidic congeners that were present in the FB, down to less than about 25 percent of the organic acidic congeners that were present in the FB, are neutralized. From about 90 percent up to about 99 percent of the acidic congeners that were present in the FB may be neutralized.

Similarly, the amount of the organic acidic congeners that are neutralized can be controlled by the amount of an alkaline treating agent, particularly sodium hydroxide, that is added to the FB to attain a target pH that is maintained within the neutralized or treated FB. According to the present invention, the target pH of the treated or neutralized FB is in the range of 5.5 to 8.5. According to the present invention, the target pH of the treated or neutralized FB may be from about 5.5 up to about 7.0. According to the present invention, the target pH of the treated or neutralized FB may be from about 5.8 up to about 6.5. According to the present invention, any two pH values listed above between and inclusive of 5.5 and 8.5 can be selected to form a target pH range for the neutralization of an FB, without departing from the spirit of the invention.

Based on the pKₐ of the organic acids present in the FB, the amount of alkaline treating agent that is titrated into the FB may be the amount sufficient to raise the pH enough to cause at least about 10 percent of the organic acids, which can be at least about 25, or at least about 50, or at least about 60, or at least about 70, or at least about 75, or at least about 80, or at least about 85, or at least about 90, or at least about 95, or at least about 96, or at least about 97, or at least about 98, or at least about 99, or at least about 99.5, or at least about 99.9 percent, of the organic acids to be present in their conjugate base form in the treated FB upon their neutralization. The amount of alkaline treating agent that is titrated into the FB may be the amount sufficient to raise the pH enough to cause less than about 99.9 percent of the organic acids, which can be less than about 99.5, or less than about 99, or less than about 98, or less than about 97, or less than about 96, or less than about 95, or less than about 90, or less than about 85, or less than about 80, or less than about 75, or less than about 70, or less than about 60, or less than about 50, or less than about 25, or or less than about 10 percent, of the organic acids to be present in their conjugate base form in the treated FB upon their neutralization. From about 80 percent up to about 99.9 percent of the organic acids within the treated FB may be in their conjugate base form. From about 90 percent up to about 99 percent of the organic acidic congeners within the treated FB may be in their conjugate base form. From about 92 percent up to about 97 percent of the organic acidic congeners within the treated FB may be in their conjugate base form. About 95 percent of the organic acidic congeners within the treated FB may be in their conjugate base form. Similarly, at least about 10 percent of the organic acids that are present in their conjugate base form as a salt upon neutralization, which can be at least about 25, or at least about 50, or at least about 60, or at least about 70, or at least about 75, or at least about 80, or at least about 85, or at least about 90, or at least about 95, or at least about 96, or at least about 97, or at least about 98, or at least about 99, or at least about 99.5, or at least about 99.9 percent, may be separated and removed from the treated FB when forming a refined FB, using any of the filtration, distillation, and/or separation apparatuses described above. Less than about 99.9 percent of the organic acids that are present in their conjugate base form as a salt upon neutralization, which can be less than about 99.5, or less than about 99, or less than about 98, or less than about 97, or less than about 96, or less than about 95, or less than about 90, or less than about 85, or less than about 80, or less than about 75, or less than about 70, or less than about 60, or less than about 50, or less than about 25, or less than about 10 percent, may be separated and removed from the treated FB when forming a refined FB, using any of the filtration, distillation, and/or separation apparatuses described above. From about 80 percent up to about 99.9 percent of the salts may be removed from the treated FB after neutralization. From about 90 percent up to about 99 percent of the salts may be removed from the treated FB after neutralization. From about 92 percent up to about 97 percent of the salts may be removed from the treated FB after neutralization. About 95 percent of the salts may be removed from the treated FB after neutralization.

Any of the methods or systems described above may be targeted toward the neutralization of one or more selected organic acid congeners. The method or process may be utilized to neutralize and/or remove acetic acid as an acidic congener. Upon addition of an alkaline treating agent, acetic acid is subsequently neutralized to a salt with its conjugate base, acetate. By comparing the pH of the treated FB to the pKₐ of acetic acid, the relative abundance of the acetate salt compared to acetic acid in the treated FB can be calculated. According to the present invention, the relative abundance of the acetate salt compared to acetic acid in the treated FB may be at least about 50:50, up to at least about 99.9:0.1. According to the present invention, the relative abundance of acetate salt to acetic acid within the treated FB may be from about 90:10 up to about 99:1. According to the present invention, all, or substantially all, of the acetic acid within the FB may be neutralized to an acetate salt. All, or substantially all, of the acetic acid may be neutralized when the pH of the FB is raised to at least 8.7.

The amount of alkaline treating agent that is added to the FB may be an amount sufficient to diminish vinegar-like tastes and/or odors resulting from the presence of acetic acid within the FB. The amount of alkaline treating agent that is added to the FB may be an amount sufficient to cause the vinegar-like taste from acetic acid to be substantially imperceptible. The amount of alkaline treating agent that is added to the FB may be an amount sufficient to cause the vinegar-like odors from acetic acid to be substantially imperceptible. The amount of alkaline treating agent that is added to the FB may be an amount sufficient to cause the resulting treated or neutralized FB to be organoleptically pure.

The alcohol content (ABV) of the refined FB produced by any of the above neutralization methods or systems without using distillation is at least about 0.05 percent by volume, up to at least about 65 percent by volume. According to the present invention, the ABV of the refined FB is less than or equal to about 65 percent by volume, down to less than or equal to about 0.1 percent by volume. The ABV of the refined FB is from about 4 percent by volume, up to about 20 percent by volume. According to the present invention, the ethyl alcohol content of the refined FB is from 10 percent by volume up to about 20 percent by volume.

According to the present invention, a refined FB is provided that comprises the following properties: (a) a pH in the range of 5.5 to 8.5, preferably 5.8 to 6.5; and (b) at least 10%, and up to 20%, by volume, ethyl alcohol; and (c) a combined concentration of acetic acid and acetate less than 1000 ppm. According to the present invention, a refined FB may have a titratable acidity, relative to acetic acid, of less than about 0.5 grams per liter of the refined FB, preferably less than about 0.25 grams per liter, and a protonated acetic acid concentration of less than about 100 parts per million, preferably less than about 50 parts per million, and more preferably less than 25 parts per million. According to the present invention a refined FB may have no measurable protonated acetic acid and or titratable acidity relative to acetic acid. According to the present invention, the refined FB may be a naturally-gluten free, gluten-reduced, or gluten removed FB comprising gluten in a range of 0 ppm to 20 ppm of gluten, preferably 0 ppm of gluten. According to the present invention, the gluten concentration in the refined FB may be about 0 ppm, or at least about 1 ppm, 2 ppm, 3 ppm, 4 ppm, 5 ppm, 10 ppm, or 15 ppm, up to at least about 20 ppm. According to the present invention, the refined FB is a beer. According to the present invention, the refined FB may further be a clarified version of the beer. According to the present invention, the above refined FB may be produced according to any of the methods and/or systems described above. According to the present invention, the above refined FB may further comprise any of the properties of any of the refined FBs produced according to any of the methods and/or systems described above.

These and other embodiments of the present invention will be apparent to one of ordinary skill in the art from the following detailed description.

### Brief Description of the Drawings

Figure 1 shows a schematic diagram of a caustic dosing system and process for neutralizing organic acids in an FB solution, using a batch neutralizing system.
Figure 2 shows a schematic diagram of a caustic dosing system and process for neutralizing organic acids in an FB solution, using a continuous-batch neutralizing system.
Figure 3 shows a schematic diagram of a caustic dosing system and process for neutralizing organic acids in an FB solution, using an in-line continuous neutralizing system, employing a caustic solution metering pump.
Figure 4 shows a caustic dosing system and process similar to Figure 3, employing a caustic flow control valve pump.
Figure 5 shows an alternative schematic diagram of a caustic dosing system and process for neutralizing organic acids in an FB solution, including a means for diverting the stream bright beer to the pH monitoring and dosing system.

### Detailed Description of the Invention

### Definitions

As used herein, the term, "and/or" when used in the context of a listing of entities, means the entities being present singly or in combination. Thus, for example, the phrase "A, B, C, and/or D" includes A, B, C, and D individually, but also includes any and all combinations and subcombinations of A, B, C, and D.

As used herein, the terms, "bright beer" or "brite beer" means the crude, beverage-grade, ethyl alcohol-containing, liquid product of fermentation, after yeast has been decanted, filtered, or otherwise removed, and the term "treated bright beer" refers to the solution of bright beer after neutralizing or treatment with an alkaline treating agent.

As used herein, the term, "caustic" means a compound that dissociates completely to yield hydroxide ions upon interacting with water to form a solution that has a strongly basic pH. Such compounds include, but are not limited to Group I and Group II hydroxides such as potassium hydroxide, sodium hydroxide, barium hydroxide, cesium hydroxide, strontium, hydroxide, calcium hydroxide, lithium hydroxide, and rubidium hydroxide.

As used herein, the term, "clarified," with respect to a "clarified fermented beverage," can refer to the general term within the brewing industry that describes any process in which solids are removed from a wort, beer, or other fermented beverage According to the present invention, clarification of a fermented beverage, or of a refined fermented beverage, can be achieved using any mechanical, chemical, or physical separation technique. Non-limiting examples include: ultrafiltration; reverse osmosis filtration; nanofiltration; granular activated carbon separation; column distillation; vacuum distillation; multi-stage flash distillation; multiple-effect distillation; vapor-compression distillation; ion exchange chromatography, particularly cation exchange chromatography; gravitation; centrifugation; decantation; freeze-thaw systems; solar evaporation systems; and electrodialysis reversal.

As used herein, the term "congener," is a substance, other than the desired type of alcohol, ethanol, produced during fermentation and can be present within a fermented beverage in small amounts. Examples of conventional congeners are chemicals such as methanol, acetone, acetaldehyde, esters, tannins, aldehydes and other organic compounds.

As used herein, the phrase "acidic congener" means an organic acid, examples of which can be acetic acid, lactic acid, propionic acid, tartaric acid, and butyric acid, that can have an effect on the taste or smell of the fermented beverage. The phrase "acidic congener" can refer to all of the acids or organic acids present in a fermented beverage, or it can refer to a subset of the acids or organic acids that are present, down to a single acid or organic acids.

As used herein, the term, "fermented beverage" (FB) means a liquid beverage solution that is the product of fermentation from any fermentable sugar source, typically after any yeast has been removed, whether it contains ethyl alcohol or it does not. FBs can include, but are not limited to, acidophiline, agkud, aleberry, amasi, aleberry, amazake, apo, ara, bahalina, bais, basi, beer, bignay wine, bikkle, bionade, blaand, boj, boza, brottrunk, Calpis, cauim, chhaang, Chibuku Shake Shake, chicha, cider, coyol wine, doogh, duhat wine, fassbrause, ginger beer, gouqi jiu, handia, hardaliye, huangjiu, ibwatu, intus, jabol, jun, kabarwaran, kasiri, kefir, kilju, kinutil, kombucha, kumis, kvass, kwete, lambanog, lassi, mageu, malt beverages, malt drink, matzoon, mauby, mbege, merisa, neera, nihamanchi, oshikundu, palek, palm wine, pangasii, parakaria, perry, podpiwek, pruno, pulque, purl, rejvelac, rice wine, ryazhenka, 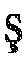 algam, sikye, tapuy, tejuino, tepache, tesgüino, thwon, tibicos, tiswin, tongba, tono, tubâ, umqombothi, wine, and žinčica. The term "fermented beverage" also includes FBs that have been distilled to form spirits.

As used herein, the term, "flavored malt beverage" (FMB) means the final malt beverage product that is formed once a neutral malt base has been filtered, treated, and processed in order to produce a consumable beverage product.

As used herein, the term, "gluten-free" means that the FB or refined FB contains substantially no gluten. Gluten-free fermented beverages (GFB) can be prepared by fermenting sugars from any fermentable sugar source, including cereal grains, that do not contain gluten. Such gluten-free cereal grains include, but are not limited to: millet, rice, sorghum, buckwheat and/or corn. According to the present invention, GFBs are prepared without malts, particularly malted barley, or hops present.

As used herein, the terms, "gluten-reduced" or "gluten-removed" mean that the FB or refined FB contains less than 20 ppm of gluten. Typically, gluten-reduced and gluten-removed FBs are prepared from barley, rye, and other fermentable sugar sources that do contain gluten, but where gluten is removed from the beverage after fermentation is completed. However, gluten-reduced and gluten-removed beverages can be prepared from fermentable sugar sources that contain minimal amounts of gluten that total to less than 20 ppm.

As used herein, the terms, "mash" or "mashing" means the process of converting the starches typically present in malts to lower-order sugar molecules, including monosaccharides, disaccharides, and trisaccharides, that are suitable for fermentation with yeast to produce an ethyl alcohol.

As used herein, the terms, "neutralize" or "neutralizing" means the neutralization of at least a portion of the acids, including organic acids, in a fermented beverage with an alkaline treating agent to form therefrom organic salts.

As used herein, the terms, "neutral malt base" (NMB) or "malt beverage base" means the ethyl alcohol-containing liquid formed as a result of filtering, treating and/or decolorizing a bright beer or other fermented beverage. According to the present invention, NMBs produced by methods and systems of the present invention are colorless, flavorless, and/or odorless.

As used herein, the term, "organoleptically pure," refers to a neutralized or refined FB in which there is substantially no perceptible taste or smell from organic acidic congeners that were originally present in the FB prior to being neutralized, even if a portion of the organic acidic congeners are still present in their acidic form after neutralization and/or separation.

As used herein, the term, "refined," with respect to a "refined fermented beverage," can refer to fermented beverages produced by methods and systems according to the embodiments described herein in which a portion or all of one or more acidic congeners within a fermented beverage have been neutralized by an alkaline treating agent to form a salt, and a portion or all of the salt is subsequently removed from the neutralized fermented beverage to produce the refined fermented beverage. According to the present invention, a refined fermented beverage can be prepared from a clarified fermented beverage that has been clarified with respect to solids within a wort, beer, or other fermented beverage, but where a portion or all of the acidic congeners naturally produced during fermentation have not been removed. According to the present invention, a refined fermented beverage may be prepared from a fermented beverage in which only solids have been removed, or from a fermentation product that has not previously been clarified. According to the present invention, a fermented beverage may be clarified and refined simultaneously, so long as the separation technique or apparatus removes, in addition to the salts, solids that would typically be removed during clarification. According to the present invention, a neutralized fermented beverage may be refined to form a refined FB, without also forming a clarified FB, and the refined FB can later be clarified to form a clarified FB.

As used herein, the term, "titratable acidity," is a measurement of the total mass of titratable acids in a solution, typically expressed as grams per liter. The total mass of titratable acids includes both hydronium ions and weak acids that are still protonated, such as acetic acid (CH₃COOH). In the brewing industry, titratable acidity is often used to quantify the organic acids present in a given FB, GFB, gluten-reduced or gluten-removed FB, NMB, FMB, potable spirit, or other neutralized product, in order to evaluate the perceivable acidity within the beverage.

As used herein, the terms, "wort" or "malt extract" means the sugar-rich solution or mixture resulting from the mashing and/or cooking process that is suitable for fermentation with yeast to produce ethyl alcohol.

### Making of a Neutral Malt Base

Disclosed are methods and systems for preparing neutralized or refined FBs according to the invention from raw or untreated FBs and other fermentation products that contain a measurable level of acidic congeners, particularly organic acidic congeners. The methods presented herein generally include a step in which an alkaline treating agent is added to a fermentation product, FB, or bright beer, to react with or neutralize at least a portion of the acidic congeners within the fermentation product, FB, or bright beer, to form salts. At least a portion of the salts can then be separated from the treated bright beer or FB to produce a refined FB.

To illustrate the systems and processes for FBs generally, an example of systems or processes to make a refined NMB from a bright beer solution or stream is described below. In some embodiments, a refined NMB is colorless, flavorless, and/or odorless, and contains a reduced or negligible level or amount of organic acidic congeners as compared to the level or amount of organic acidic congeners in untreated fermentation products and FBs. Without being limited by a particular theory, FMBs produced from the refined NMB can have a more pleasing taste profile as a result of removing organic acids that are naturally present after the brewing and fermentation process. Similarly, removing organic acids from the NMB creates a more versatile NMB to which a variety of flavoring agents can be added, particularly those that would otherwise create an unpleasant tasting FMB in combination with organic acids naturally present in a conventional NMB. Additionally, it is believed that fewer flavoring agents, particularly sugar, are needed to combine with NMBs produced by methods described herein, relative to NMBs that have not been neutralized by the addition of an alkaline treating agent, in order to ultimately produce an FMB of the same or comparable organoleptic quality.

Traditional methods of brewing an NMB are widely known in the art and particularly described in detail in U.S. Patent Nos. 4,440,795, 5,294,450, 5,618,572, and 7,008,652, as well as U.S. Patent Publication 2014/0127354. Generally, to produce a conventional NMB, a supply of malt must first be obtained. The malt may be of any conventional type known in the art which is suitable for producing beer and other brewed beverages. One non-limiting example of a suitable malt is "Brewers Malt," available from Briess Malt & Ingredients Co. The malt is then combined with deionized water and heated at high temperature to produce a mash. At this stage, the mash will contain various malt-derived fermentable sugars (e.g. including but not limited to maltose and maltotriose), which are fermentable by yeast into ethyl alcohol, as well as several malt-derived non-fermentable sugars (e.g. including but not limited to maltotetraose and maltopentaose) that cannot be broken down into ethyl alcohol by yeast.

However, during the mashing process, precipitation of phosphate and proteins from the malts can result in the formation of insoluble calcium salts, which have been strongly correlated with a decrease in the pH of the mash product. Additionally, several malt varieties contain high levels of lactate (*See* South, J.B. "Variation in pH and Lactate Levels in Malts" (1996) J. Inst. Brew. 102:155-159), acetate, butyrate, propionate that ultimately are transferred to the mash. For instance, South determined that the concentration of lactate in several varieties of malts ranged from 17.6 to 126.3 milligrams per 100 grams of malt (dry weight). The lactate concentration is inversely proportional to the pH of the wort, ranging from 5.59 at the highest lactate concentration to 6.02 at the lowest lactate concentration.

After the mash product has been generated, several processes known in the art can be utilized to generate a sugar-rich wort that is suitable for fermentation. Such processes include, but are not limited to, adding enzymes that are capable of breaking down the starches and/or sequentially heating the mash to catalyze chemical conversion of the starches into sugars.

Next, the mash is physically treated in order to remove solids therefrom, using any apparatus known in the brewing art for filtering mash. The liquid filtrate, which is colloquially known as the wort or malt extract, can then be collected and transferred to a brew kettle in the presence of additional fermentable sugars (e.g. dextrose, sucrose, and/or corn syrup) and optionally, "hop materials," which can encompass a wide variety of different products, including but not limited to hop cones, pre-isomerized pelletized hops, and/or solvent-extracted concentrated hop extract. Yeast can then be added to the wort to initiate fermentation, which is allowed to continue until there are no fermentable sugars remain. Typically, the fermentation process can last for 7-11 days, but the fermentation time is ultimately dependent on numerous factors, including but not limited to temperature. Warmer temperatures typically result in faster fermentation, although excessive heat can create several issues and is often avoided.

After fermentation is completed, the yeast from the alcohol-containing fermented product is allowed to settle out of the product and removed by conventional decantation or filtering techniques, forming a bright beer. Bright beer typically has a pH of about 4.0 +/- 0.25, based on the identity and total concentration of the organic acids that are present, and is usually colored, fragrant, and unsuitable for use in make an FMB However, acids, including organic acids, in the mash product are retained throughout the entire brewmaking process, and none of the filtering or purification techniques address the role that organic acidic congeners have in contributing to undesired tastes or odors when mixed with certain flavor additives to form an FMB. In contrast, an NMB produced by any of the methods described below can be colorless, flavorless, and/or odorless. More generally, removing acidic congeners from an FB of any type to produce a refined FB using any of the methods and systems described below can create a more pleasurable organoleptic experience for the person consuming the beverage.

### Embodiments of the Methods

In one embodiment, a method of producing a refined FB from an FB solution comprising one or more organic acidic congeners is disclosed, comprising the steps of (a) neutralizing one or more organic acidic congeners contained in the FB solution by titrating or adding into the FB an amount of an alkaline treating agent sufficient to convert at least a portion of the one or more organic acidic congeners into its conjugate base to form an organic salt; and (b) removing the organic salt, thereby producing a refined FB. In an embodiment, the sufficient amount of alkaline treating agent is sufficient to raise the pH of the FB solution to at least about 5.0, including at least about 5.5, 5.8, 5.9, 6.0, 6.1, 6.2, 6.3, 6.5, 6.8, 7.0, 7.5, 7.8, 8.0, 8.2, or 8.5, including at least about 8.7. In some embodiments, the sufficient amount of alkaline treating agent is sufficient to raise the pH of the FB solution to less than about 8.7, including less than about 8.5, 8.2, 8.0, 7.8, 7.5, 7.0, 6.8, 6.5, 6.4, 6.3, 6.2, 6.1, 6.0, 5.9, 5.8, or 5.5, down to less than about 5.0. In some embodiments, the sufficient amount of alkaline treating agent is sufficient to raise the pH of the FB solution to a pH range from about 5.5 up to about 5.8, or 5.9, or 6.0, or 6.1, or 6.2, or 6.3, or 6.5, or 6.8, or 7.0, or 7.5, or 7.8, or 8.0, or 8.2, or 8.5. In some embodiments, the sufficient amount of alkaline treating agent is sufficient to raise the pH of the FB solution to a pH range from about 5.8 up to about 5.9, or 6.0, or 6.1, or 6.2, or 6.3, or 6.5, or 6.8, or 7.0, or 7.5, or 7.8, or 8.0, or 8.2, or 8.5. In some embodiments, the sufficient amount of alkaline treating agent is sufficient to raise the pH of the FB solution to a pH range from about 6.0 up to about 6.1, or 6.2, or 6.3, or 6.5, or 6.8, or 7.0, or 7.5, or 7.8, or 8.0, or 8.2, or 8.5. In some embodiments, the target pH of the treated or neutralized FB is from about 6.5 up to about 6.8, or 7.0, or 7.5, or 7.8, or 8.0, or 8.2, or 8.5. In some embodiments, the sufficient amount of alkaline treating agent is sufficient to raise the pH of the FB solution to a pH range between and inclusive of any two pH values listed above between and inclusive of 5.0 and 8.5. Organic acidic congeners can include, but are not limited to, organic carboxylic acids such as acetic acid, lactic acid, propionic acid, tartaric acid and butyric acid.

After removal or separation of the salt forms of the organic acidic congeners from the pH-treated FB solution, the pH of the resulting refined FB may have a slightly different and partly lower pH, or partly higher pH, than the pH of the unfiltered and neutralized bright beer, depending on the pKₐ of any organic acids remaining in the refined FB. In some embodiments, the refined FB has a lower pH than a pH-treated FB in which the organic acid congeners have been neutralized but not removed. In some embodiments, the neutralized organic acidic congeners can be retained within the pH-treated FB without undergoing a subsequent removal step.

The alkaline treating agent can include one or more basic compounds, including both strong and weak bases, that are capable of reacting with and neutralizing organic acids. Suitable strong bases can include, but are not limited to, a caustic solution comprising at least one Arrhenius base that increases the concentration of hydroxide ions in a solution with water, such as the alkali (Group I) and alkaline earth (Group II) metal hydroxides potassium hydroxide, sodium hydroxide, barium hydroxide, cesium hydroxide, strontium hydroxide, calcium hydroxide, lithium hydroxide, and rubidium hydroxide. Stock solutions of the caustic solution can be any concentration, but in some embodiments, the concentration is sufficiently high to safely add a minimal amount of the caustic solution to neutralize acidic congeners within the bright beer without substantially affecting its volume. In some embodiments, the caustic solution comprises up to a 50% (v/v) solution of sodium hydroxide. In some embodiments, the caustic comprises up to a 50% (v/v) solution of potassium hydroxide.

Upon reacting with any one of the metal hydroxides listed above, the at least one organic acidic congener is converted to a salt and water, according to net ionic equation in Equation 1, below.

HA (aq) + OH⁻ (aq) → A⁻ (aq) + H₂O (ℓ) (1)

In a non-limiting example, when the organic acidic congener is acetic acid, the neutralization reaction proceeds according to Equation 2, shown below.

CH₃COOH (aq) + OH⁻ (aq) → CH₃COO⁻ (aq) + H₂O (ℓ) (2)

In other embodiments, the alkaline treating agent can comprise a weak base. Generally, a weak base does not dissociate completely in water and can exist in equilibrium with its conjugate acid. As with the strong bases, enough of a weak base can be added to neutralize a portion of the acidic congeners within the FB. In some embodiments, enough weak base is added to completely neutralize all of the acidic congeners that are present. Suitable weak bases can include, but are not limited to, sodium acetate, sodium bicarbonate, and ammonium hydroxide. In some embodiments, the alkaline treating agent comprises ammonium hydroxide. As a non-limiting example, the equation of the neutralization reaction between acetic acid and ammonium hydroxide is shown below in Equation 3.

CH₃COOH (aq) + NH₄OH (aq) → CH₃COONH₄ (aq) + H₂O (ℓ) (3)

However, in any reaction between a weak acid and a weak base, the resulting net ionic equation results in the production of water, according to Equation 4, below.

H⁺ (aq) + OH⁻ (aq) → H₂O (ℓ) (4)

In another embodiment, the neutralization of the at least one acidic congener can be accomplished by titrating into the bright beer a sufficient amount of the alkaline treating agent to transform at least a portion of the organic acidic congeners within the FB into organic salts, or filterable forms thereof. In some embodiments, all, or substantially all, of the organic acidic congeners within the FB are neutralized into organic salts or filterable forms thereof, which can be accomplished by raising the pH enough to reach or surpass the equivalence point of each of the organic acidic congeners within the FB and convert them into their respective conjugate bases. When a weak acid is titrated with a strong base, such as NaOH, the equivalence point occurs above a pH of 7. As a non-limiting example, the pKₐ of acetic acid is 4.75, and the pH at the equivalence point, in which all, or substantially all, of the acetic acid has been converted to acetate, is typically around 8.7 to 8.8. Increasing the pH of the FB with a strong base beyond the equivalence point simply adds additional hydroxide ions to the solution, without measurably affecting the concentration of acetic acid.

In some embodiments, refined NMB's with substantially no measurable organic acids can be produced, for example, when a completely flavorless, odorless, and colorless beverage is desired. Such refined NMB's can be versatilely used as bases for the widest variety of flavored beverages, without clashing with any of the flavors introduced in the production of the flavored beverage. However, in some embodiments, a refined FB or NMB in which some of the organic acids are retained after neutralization can be desired. In some embodiments, the flavors provided by some organic acids can supplement or enhance the odor and/or taste of compounds that are added during the flavoring process to produce a flavored beverage, and complete neutralization of those acids could negatively affect a person's organoleptic experience.

Accordingly, and in some embodiments, the neutralization of the at least one acidic congener can be accomplished by titrating into the FB or bright beer a sufficient amount of the alkaline treating agent to transform at least a portion of the organic acids within the FB or bright beer into organic salts, or filterable forms thereof. In some embodiments, the amount of alkaline treating agent added to the FB is the amount sufficient to neutralize at least about 10 percent by weight of the organic acidic congeners within the FB, which can be at least about 25 percent (%), or at least 50%, or at least 60%, or at least 70%, or at least 75%, or at least 80%, or at least 85%, or at least 90%, or at least 95%, or at least 96%, or at least 97%, or at least 98%, or at least 99%, or at least 99.5%, or at least about 99.9 percent by weight of the organic acidic congeners within the FB. In some embodiments, less than about 99.9 percent by weight of the organic acidic congeners within the FB are neutralized, including less than about 99.5, 99, 98, 97, 96, 95, 90, 85, 80, 75, 70, 60, 50, or 25 percent, down to less than 10 percent by weight.

One way to determine the extent of the neutralization of the organic acids within an FB is to compare the titratable acidity-a calculation of the total mass of hydronium ions (H₃O⁺) and protonated weak acids in a volume of solution, often expressed as grams per liter or parts per million-of an untreated FB with a treated or refined FB. Titratable acidity is commonly used within the brewing and winemaking industries because pH only describes the amount of H₃O⁺ ions in a solution. In contrast, humans can perceive acidity from both H₃O⁺ ions and protonated weak acids. Titratable acidity is determined by calculating how much of a base, usually NaOH, must be added to the beverage in order to raise the pH of the beverage to a pre-determined value, which is typically near the equivalence point of the titration. In the brewing industry, the pre-determined pH value is typically between about 8.0 and 8.5, based on the identity and relative quantity of the organic acids that are present.

Furthermore, the perceived acidity of an FB itself can be evaluated using titratable acidity. As the titratable acidity decreases, the perceived acidity also decreases, and can ultimately reach a point where a person cannot perceive the taste and/or smell of acid(s) within the FB. In some embodiments, the titratable acidity of a refined FB is less than about 1 gram per liter (g/L), including less than about 0.75, 0.5, 0.4, 0.3, 0.2, 0.1, or 0.05, down to less than about 0.01 g/L.

In some embodiments, the neutralization of a single organic acid congener can be quantified, including the acetic acid, lactic acid, propionic acid, tartaric acid and butyric acid congeners listed above. In some embodiments, the single organic acid congener that is quantified is acetic acid. Upon addition of an alkaline treating agent to the FB, acetic acid is subsequently converted to an acetate salt. At the pKₐ of acetic acid, which is about 4.75, the ratio of acetate to acetic acid within a solution is 50:50. As the pH of the solution is increased, the relative abundance of the acetate salt compared to acetic acid is also increased, so at one pH unit above the pKₐ, 5.75, the ratio of acetate to acetic acid is 90: 10, at two pH units above the pKₐ, the ratio of acetate to acetic acid is 99:1, and so on. Thus, in some embodiments, the amount of alkaline treating agent added to an FB can be an amount sufficient to raise the relative abundance of the acetate salt compared to acetic acid to be at least about 50:50, including at least about 60:40, 70:30, 75:25, 80:10, 85:15, 90:10, 95:5, 96:4, 97:3, 98:2, 99:1, or 99.5:0.5, up to at least about 99.9:0.1. In some embodiments, the relative abundance of acetate salt to acetic acid within the treated FB is about 90:10 to about 99:1, or about 92:8 to about 98:2, or about 95:5. In some embodiments, all, or substantially all, of the acetic acid within the FB is neutralized to an acetate salt.

Similarly, the concentration of acetic acid within an FB can be determined analytically. Non-limiting examples of analytical methods to determine acetic acid concentration within an FB include high performance liquid chromatography (HPLC) and enzymatic assays. One such enzymatic assay kit for determining the concentration of acetic acid is the K-ACETRM acetic acid test kit, available from Megazyme^{®}. Under assay conditions, all, or substantially all, of the acetic acid that is present in an FB sample is converted to acetate. However, if the pH of the FB sample is known, one can determine how much acetic acid is present based on the pKₐ, as discussed above. For example, if the pH of a FB is 6.35, and the concentration of the acetate in the sample is determined to be 300 ppm, then approximately 4 percent of the acetic acid in the treated FB is present in the protonated form, or about 12 ppm.

According to the invention, the combined concentration of acetic acid and acetate within a refined FB, after separating and removing salts of the organic acid congeners that were formed during neutralization, is less than about 1000 parts per million by weight (ppm), which can be less than about 900 ppm, or less than about 800 ppm, or less than about 700 ppm, or less than about 600 ppm, or less than about 500 ppm, or less than about 400 ppm, or less than about 300 ppm, or less than about 200 ppm, less than about 100 ppm, or less than about 50 ppm. In some embodiments, the combined concentration of acetic acid and acetate within a refined FB is in a range of about 200 ppm to about 500 ppm. In some embodiments, the combined concentration of acetic acid and acetate within a refined FB is in a range of about 300 ppm to about 400 ppm.

In another embodiment, the concentration of acetic acid in its protonated form within a refined FB, based on its pH, is less than about 500 ppm, including less than about 400, 300, 200, 100, 75, 50, 25, 10, or 5, down to less than about 1 ppm. In some embodiments, the concentration of protonated acetic acid in the refined FB is in a range of about 10 ppm to about 100 ppm, or about 25 ppm to about 75 ppm. In some embodiments, there is substantially no protonated acetic acid within the refined FB.

Within an industrial brewmaking process, bright beer and other untreated FB's can be neutralized in single batches that must attain a specific pH before being pumped to the next station/processing step, or over the course of a continuous process as the FB is constantly pumped from one location to another. Several instrumentation and electrode systems for monitoring and adjusting the pH of a liquid are known in the art. Such non-limiting examples include batch processing, in-line processing, and continuous stirred-tank pH monitoring and dosing systems, for example, available from Omega^{®} Engineering, located in Stamford, Connecticut.

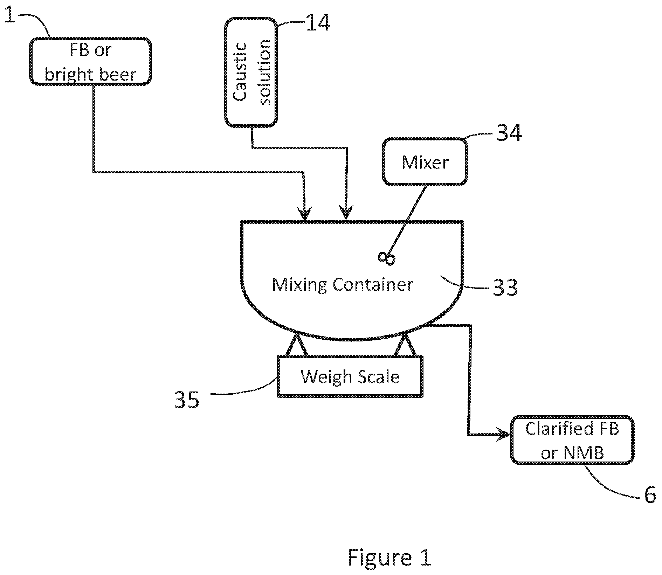

In an embodiment, and as illustrated in Figure 1, a caustic dosing system and method can include a mixing vessel for holding a determined quantity of an FB containing organic acid congeners. The determined quantity of the FB can be based on mass, such as by a weigh scale 35 for the contents of the container 33, by a volume indicator in the container 33, or by the delivery of a volumetric amount of the FB or bright beer into the container 33. After the determined quantity of the FB is treated to neutralize the organic acids, the treated FB or determined quantity of the FB can be emptied from the container 33 to a post-filtration or separation apparatus 4 to remove the salt forms of the organic acids.

To determine how much of the alkaline treating agent to add to the mixing container to neutralize the organic acid congeners within the FB, a known concentration of the alkaline treating agent can be titrated into a known amount of the FB that has been aliquoted into a separate container, until a target pH is reached. The target pH can include any of the pH values listed above. Once the target pH is reached, one can determine the molar ratio of the alkaline treating agent to the organic acid congeners within the FB, using the known concentration and volume of the alkaline treating agent titrated into the FB, using well-known calculations. Once the molar ratio between the alkaline treating agent and the organic acid congeners are known, one can determine how much of the alkaline treating agent to add, with mixing, to the known volume of the FB within the mixing container to reach the same pH. The alkaline treating agent used to treat the contained quantity of FB can be the same alkaline treating agent used to titrate the sample, or can be a different alkaline treating agent in a stoichiometric-equivalent quantity. The treated contained quantity of the FB can then be emptied from the container to a post-filtration or separation apparatus to remove the salt forms of the organic acids.

In another embodiment, the post-filtration or separation apparatus 4 can comprise one or more filters for removing neutralized organic acid salts, other congeners originally present in the untreated FB, and solids including but not limited to small molecules and metal chelates, macromolecules such as proteins and nucleic acids, microorganisms such as bacteria and/or viruses, and particulates. Pore size for the filters can be selected based on the desired properties of the refined FB, and can range from less than 1000 microns down to less than 1 micron, including less than 0.1 microns. Additionally, one or more filtration mechanisms can be utilized, including but not limited to: coarse, micro-, nano-, and ultrafiltration membranes; reverse osmosis filtration; diatomaceous earth filtration; and charcoal filtration. In some embodiments, the post-filtration or separation apparatus 4 can comprise a reverse osmosis filtration apparatus. Other separation apparatuses can include ion exchange chromatography, particularly cation exchange chromatography; gravitation; centrifugation; and/or decantation.

In another embodiment, the post-filtration or separation apparatus 4 can comprise one or more distillation apparatuses that can be utilized in a process to make a refined spirit, in which fractions containing ethanol are separated from aqueous fractions containing the neutralized organic acid salts, as well as other minor chemical constituents, that are produced or were present during the mashing process. Distillation apparatuses can include, but are not limited to: column distillation, vacuum distillation, multi-stage flash distillation, multiple-effect distillation, and vapor-compression distillation apparatuses.

In another embodiment, filtration and distillation apparatuses can be utilized in combination or wholly separate from one another. For example, and in one embodiment, a refined FB can be produced by filtering out the organic acid congeners, without using distillation. In some embodiments, a refined spirit can be produced by distilling out the alcohol from a neutralized FB solution containing the organic acidic congeners in salt form, without using filtration. In some embodiments, a refined spirit can be produced by first filtering out the salt forms of the organic acidic congeners from the treated FB, and then subsequently distilling the filtrate to produce the refined spirit.

In some embodiments, a method for producing a refined FB having reduced or negligible levels of organic acidic congeners is provided, comprising the steps of (a) providing a FB comprising at least one acidic congener; (b) neutralizing the FB by titrating a sufficient amount of an alkaline treating agent into the FB to convert all, or substantially all, of the at least one acidic congener from the FB into an organic salt to produce a treated FB; and (c) separating the salt forms of the organic acids from the neutral FB to produce an FB.

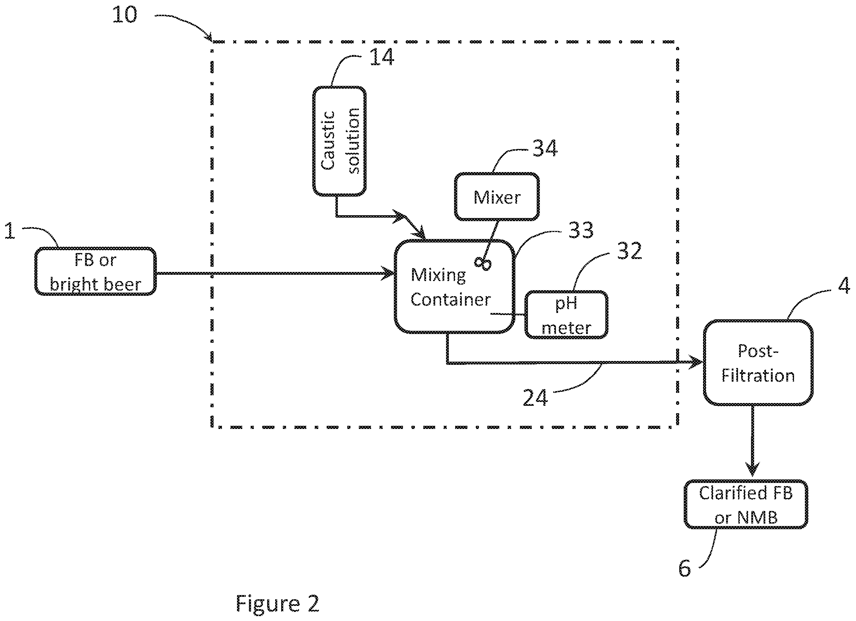

In another embodiment, and as shown in Figure 2, the caustic dosing system 10 can comprise a mixing means that includes a continuous-batch or batch mixing container 33 that retains a volume of treated FB solution, with a mixing device 34 for homogenizing the solution, and a pH meter for detecting the pH thereof, retained in the container 33. A pH meter 32 in communication with the controller 26 detects the pH of the treated FB solution retained in the tank, and the controller 26 adjusts the sufficient quantity of the caustic solution metered into the container 33 based on the rate or quantity of FB stream 20, and the pH of the treated FB solution as measured by the pH meter 32, or by the pH of the FB stream 20, or both. In this embodiment, the outflow of treated FB solution 24 can be substantially continuous.

In an embodiment wherein the container 33 is a batch mixing tank, a quantity of FB solution 1 is loaded into the tank 33, and a controlled quantity of caustic solution is passed or metered into the batch quantity of FB solution until a pH in the target pH range is achieved. The batch of pH-treated FB is then discharged from the tank 33 to post-filtration 4.

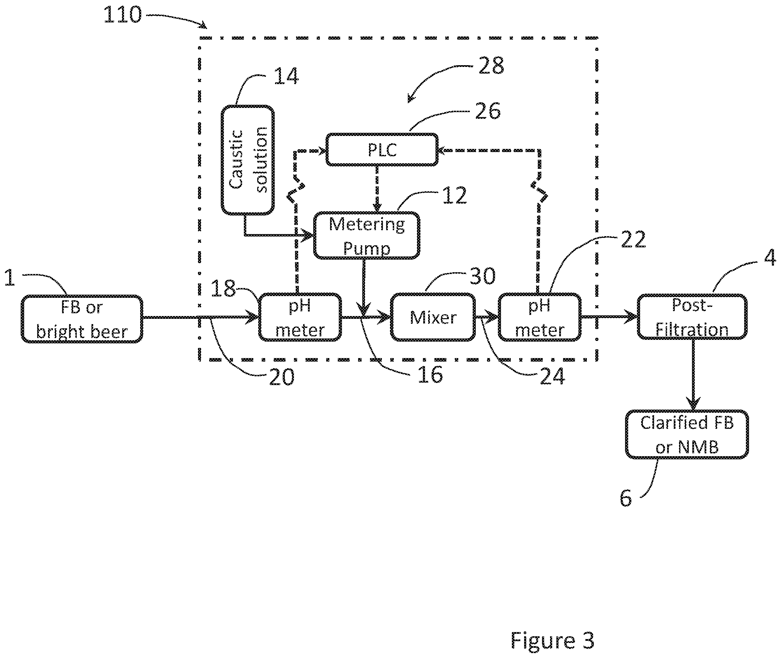

In another embodiment, and as illustrated in Figure 3, the pH monitoring and dosing system is an in-line caustic dosing system. The in-line caustic dosing system 110 processes an FB stream 1 into an outflow of a refined FB or NMB 6. The FB stream 1 passes to the in-line caustic dosing system 110, and after pH treatment of the FB stream 1 in the in-line caustic dosing system 110, the resulting neutralized FB 24 is processed by post-filtration 4 to remove or filter the salt forms of the organic acids, to produce the refined FB 6.

The in-line caustic dosing system 110 includes a metering means, illustrated as a metering pump 12, for metering a quantity of a caustic solution from a container 14 into a junction of the piping system 16 disposed between two pH meters, including a first pH meter 18 that detects the pH of the FB stream entering 20 the in-line caustic dosing system 110, and a second pH meter 22 that detects the pH of the treated FB stream 24 after the addition of the caustic solution. The two pH meters 18 and 22 and metering pump 12 are in data signal transfer and control communication with a programmable logic controller (PLC) 26 to form a communication and control loop 28 that detects pH of the FB streams, determines an amount of caustic solution sufficient to neutralize organic acidic congeners in the FB, and controls the quantity and/or rate of caustic solution added to the FB stream that is sufficient to neutralize the FB stream to a target pH range sufficient to neutralize the organic acidic congeners within the FB stream 20. In some embodiments, the concentrated caustic stock composition can be a 50% (w/v) solution of sodium hydroxide.

The flow rate of the FB stream 20 is determined by the processing conditions upstream for making the FB 1. While the volumetric flow rate is typically constant, some variation can be expected. In an embodiment, an upstream flow of the FB 1 can be captured into a holding container, and pumped at a more constant volumetric rate from the container to the in-line caustic dosing system 110. The holding container, would have sufficient volume to allow for fluctuations of the FB flowing in, while maintaining, or regulating, the flow rate of the FB stream 20 to the in-line caustic dosing system 110.

Typically, the pH of FB entering the caustic dosing system is less than about 6.0. In some embodiments, the pH of FB is less than about 5.0, or less than about 4.0, or less than about 3.0. However, the pH can vary according to the identity and concentration of the acidic congeners within the FB. For instance, the pKₐ values of acetic acid, lactic acid, propionic acid, and butyric acid are 4.75, 3.86, 4.87, and 4.82, respectively. As reported by Smith, (*see* "Variation in pH and Lactate Levels in Malts," above) the concentration of lactate in various malt varieties ranged from 17.6 to 126.3 milligrams per 100 grams of malt. Based on the pH of the FB entering the caustic dosing system determined at the pH meter 18, the PLC 26 determines the amount of caustic solution to add into the FB stream by metering pump 12 to raise the pH to within the target pH range to neutralize the organic acidic congeners.

The second pH meter 22, located on the outflow side of mixing means, discussed below, provides feedback control by communicating to the PLC 26 of the pH of the pH-treated FB stream after caustic solution is injected or added. In an embodiment, after the FB stream has passed through the in-line caustic dosing system 110, the neutralized or treated FB has a pH sufficient to neutralize the organic acid congeners. The PLC 26 can be configured to increase or decrease the amount or rate of caustic solution injected by the in-line caustic dosing system 110 until the pH of the neutralized (treated) FB is within the target pH range.

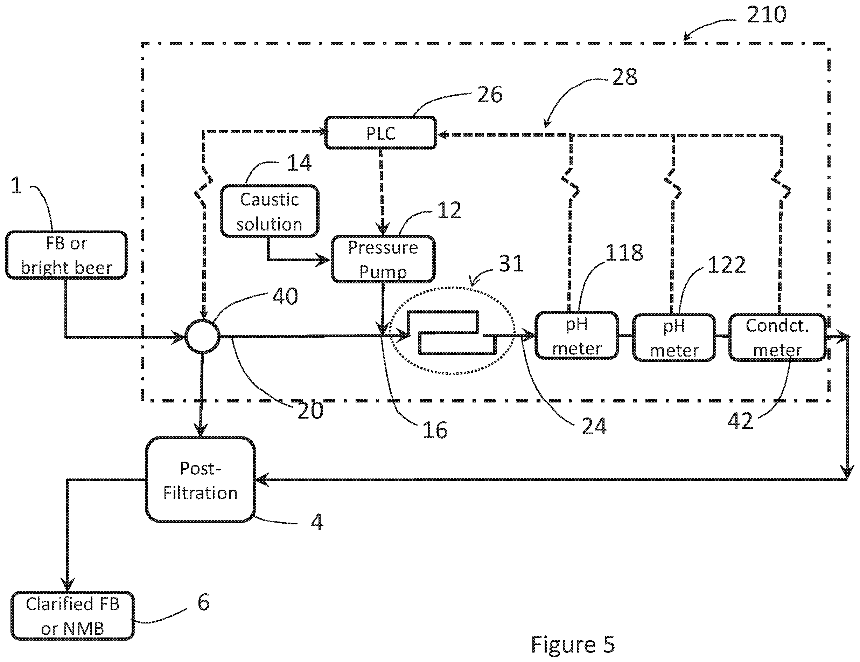

The in-line caustic dosing system 110 can also include a mixing means for mixing the stream of FB and the caustic solution into a homogenous pH-treated solution having a pH that has been adjusted into the target pH range. The mixing means ensures homogeneity of the pH-treated solution and improves the neutralization control and outcome. One embodiment of a mixing means is an in-line mixer 30, such as a static in-line mixer, as shown in Figure 3. In another embodiment, shown in Figure 5, a mixing means can comprise retention piping to increase the amount of time that the caustic solution is in contact with the stream of FB. The retention piping can comprise a length of flow piping 31, which can include one or a plurality of elbows or turns in piping, the length of the flow piping and/or the one or plurality of elbows being sufficient to homogenize the pH-treated solution.

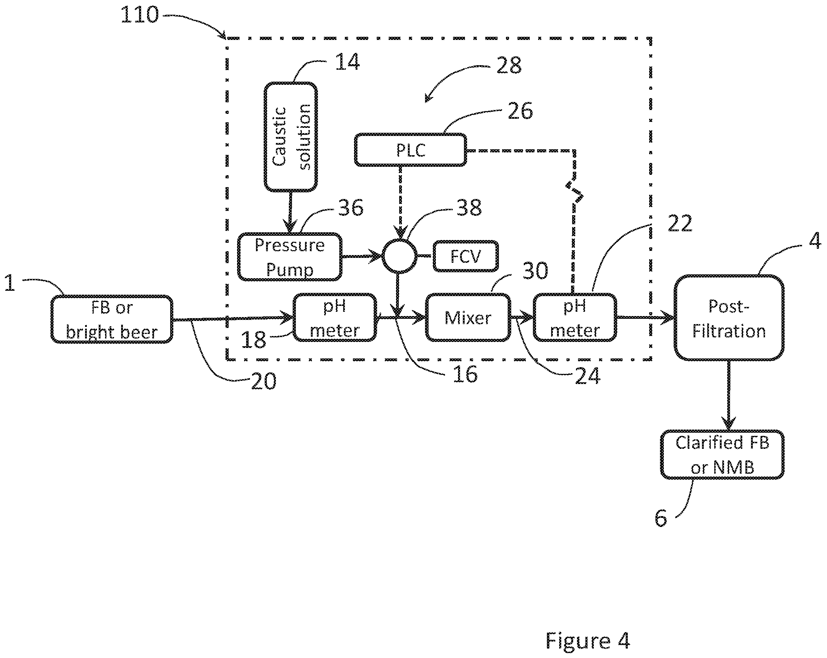

In an alternative embodiment of the in-line caustic dosing system 110, as shown in Figure 4, the sufficient quantity of caustic solution is controlled using a flow control valve (FCV) 38 that regulates the solution under pressure from a pressure pump 36.

In another alternative embodiment and as shown in Figure 5, an in-line caustic dosing system 210 can comprise a means for diverting the stream of FB 1 away from a filtration system, illustrated as the post-filtration system 4 described herein above, and into a pH monitoring and dosing system, illustrated as the in-line caustic dosing system. The diverting means comprises a three-way selection valve 40 having an inlet for the stream of FB 1, a first outlet 41 in fluid communication with the filtration system, and a second outlet 42 in fluid communication with the in-line caustic dosing system. The three-way selection valve 40 can be manually or mechanically actuated, and the mechanical actuation can be controlled by a control system. The three-way selection valve 40 also includes sensors or switches to detect its position, which can include a switch for detecting a first position when diverting the FB 1 to the filtration system, for detecting a second position when diverting the FB 1 to the in-line caustic dosing system. Optional other positions can also be detected, which may include a shutoff position that shuts off flow through the selection valve 40.

While the FB stream 20 is starting up and in conventional operating state, the three-way selection valve 40 is positioned in its first position to divert the FB 1 to the filtration system. When the in-line caustic dosing system is ready for operation, the diverting means embodied by the three-way selection valve 40 is actuated to its second position to divert the FB 1 to the in-line caustic dosing system, and a switch is activated that signals the PLC 26 that the FB stream 20 has been diverted to the in-line caustic dosing system. Once stable flow is achieved, the PLC 26 initiates startup of the metering pump 12 and detection by the pH meter(s) 118 (and 122) to bring the pH of the treated solution into the target pH range.

A metering pump 12, as illustrated and described in Figure 3, dispenses the caustic solution into the FB 1 at a junction 16 upstream of a pH meter, illustrated as a pair of adjacent pH meters 118 and 122. The caustic solution is sufficiently mixed into the FB stream within the retention piping 31. As previously described, the PLC 26 controls the operation and caustic flow rate of the metering pump 12, to maintain the resulting pH of the pH-treated solution within its target pH range.

The retention piping 31 comprise an length of flow piping 31, which can include one or a plurality of elbows or turns in piping, the length of the flow piping and/or the one or plurality of elbows being sufficient to homogenize the pH-treated solution, and ensure a repeatable and consist measurement of the pH of the flowing stream. In the illustrated embodiment, the retention piping includes a plurality of lengths of piping and a plurality of 90-degree elbows to provide an amount of turbulence with the stream for homogenous mixing of the pH-treated solution.

In some embodiments that employ two pH meters, a first pH meter 118 and a second pH meter 122 adjacent and downstream of the first pH meter 118. The PLC 26 can receive and compare the pH readings from the two pH meters 118 and 122, in order to evaluate the homogeneity of the pH-treated FB. When the pH of the pH-treated FB at pH meter 18 and 22 is identical or nearly identical, then the pH-treated FB is presumed to be homogenous, whereas, if the pH readings at pH meters 18 and 22 are different, then the pH-treated FB is presumed not to be homogenous, and indicating that more mixing within the holding tube 40 is needed. In such embodiments, the retention piping can comprise auxiliary piping into which the mixing stream can be directed for additional mixing.

Also as illustrated in Figure 5, the in-line caustic dosing system 210 can additionally comprise a conductivity meter 42 that can be utilized to determine whether the organic acid congeners within the pH-treated FB or beer stream have been neutralized. In general, conductivity meters measure the electrical conductivity within a solution by measuring the amount of ionized species within the solution. Measuring conductivity is often useful for inline acid-base titrations at constant temperature because conductivity can be measured quickly and the conductivity is often comparable from one production run to another.

For example, in acid-base titrations in which a strong base is titrated into a solution of one or more weak acids, the addition of the strong base changes the conductivity of the weak acid solution. At first, the addition of NaOH creates a buffer solution in which the H⁺ concentration within the solution is only slowly reduced, and the conductivity falls slightly. The decrease in conductivity is counteracted as more base is introduced to the solution and more Na⁺ is produced along with the conjugate base of the weak acid, increasing the conductivity of the solution. After all of the acid has been neutralized and the equivalence point has been reached, adding further NaOH typically increases the conductivity of the system sharply, as OH⁻ ions begin to accumulate and pre-dominate the ionic species within the solution.

The metering pump 12 and conductivity meter 42 are in data signal transfer and control communication with PLC 26 and within the communication and control loop 28. The PLC 26 can be configured to increase or decrease the amount or rate of caustic solution injected by the in-line caustic dosing system 110 until the conductivity of the treated FB is within a target conductivity range. In another embodiment, the flow rate and/or volume of the caustic solution metered into the untreated FB stream from one production run can be utilized to set an initial flow rate and/or volume of the caustic solution metered into the untreated FB stream in successive production runs.

It will be clear and obvious to persons of ordinary skill in the art that there are other apparatus, devices, and systems that can be employed to control a sufficient quantity and/or rate of caustic solution. Similarly, although Figures 1 through 5 above utilize a caustic solution as the alkaline treating agent, persons of ordinary skill in the art would recognize that an alkaline treating agent comprising a weak base can be substituted in part or whole for the caustic solution in any of the systems described above in order to neutralize the organic acidic congeners within the FB.

In another embodiment, refined FB produced by the systems described above is a refined NMB. In some embodiments, the alcohol content (ABV) of a refined NMB is at least about 0.05 percent, including at least about 0.1, at least about 0.5, at least about 1, at least about 2, at least about 3, at least about 4, at least about 5, at least about 6, at least about 7, at least about 8, at least about 9, at least about 10, at least about 12, at least about 15, at least about 17, at least about 20, at least about 25, at least about 30, at least about 35, at least about 40, at least about 45, at least about 50, at least about 55, at least about 60, and at least about 65 percent by volume of the NMB. In other embodiments, the ABV of a refined NMB is less than or equal to about 65, including less than or equal to about 60, less than or equal to about 55, less than or equal to about 50, less than or equal to about 45, less than or equal to about 40, less than or equal to about 35, less than or equal to about 30, less than or equal to about 25, less than or equal to about 20, less than or equal to about 15, less than or equal to about 10, less than or equal to about 9, less than or equal to about 8, less than or equal to about 7, less than or equal to about 6, less than or equal to about 5, less than or equal to about 4, less than or equal to about 3, less than or equal to about 2, less than or equal to about 1, less than or equal to about 0.5, less than or equal to about 0.1, and less than or equal to about 0.05 percent by volume of the NMB. Useful ranges can be selected from any of the above ABV values between and inclusive of about 0.05 percent to about 65 percent by volume of the NMB, including from about 5 percent to about 20 percent by volume, from about 10 percent to 20 percent by volume, from about 12 percent to 20 percent by volume, from about 15 percent to about 20 percent by volume, from about 17 percent to about 20 percent by volume, from about 10 percent to about 17 percent by volume, or from about 12 percent to about 15 percent by volume. In some embodiments, the refined NMB further comprises hops. In some embodiments, the NMB is substantially free of hops. In some embodiments, the NMB is a gluten-free base (GFB). In some embodiments, the NMB is a gluten-reduced or gluten-removed base.

In some embodiments, a neutralization system for neutralizing a bright beer to produce a refined NMB having substantially neutral pH organic acid forms is provided, comprising: a beer stream, an in-line caustic dosing system, and at least one filtration or separation apparatus configured to filter out the salt forms of the acid congeners from the beer stream. The in-line caustic dosing system can comprise at least one pH meter for monitoring the pH of the beer stream, a container for an alkaline treating agent, a metering pump, and a central programmable logic controller (PLC) that is configured to monitor the pH of the beer stream collected by the at least one pH meter and to control the amount of the alkaline treating agent dispensed from the container by the metering pump.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

### Examples

### Example 1: Production of NMBs Using a Caustic Dosing System

An NMB is produced in accordance with embodiments described above, using any of the caustic dosing systems described above. A bright beer containing acidic congeners is introduced into the caustic dosing system and a quantity of sodium hydroxide is added to the bright beer, with mixing, until a pre-determined target pH of the treated FB is reached, about 6.0. The treated FB is subsequently filtered through a reverse osmosis membrane to remove neutralized organic acids from the treated FB and form an NMB. Additional NMBs are produced using the same procedure, except with target pH's of 7.0 and 8.0, respectively.

### Example 2: Physiochemical Analysis of the Acidity of NMBs

A study is conducted in accordance with embodiments of the present disclosure to determine the acidity and the extent of neutralization and removal of organic acids, particularly acetic acid, of NMBs produced by the caustic dosing system of Example 1. Each of the three NMBs produced in Example 1, as well as a sample of untreated bright beer, are evaluated for pH, titratable acidity, and acetic acid content. The pH of each FB sample is determined using a pH meter, either as a standalone instrument or disposed within the caustic dosing system. The titratable acidity of each FB sample is approximated by titrating a known concentration of sodium hydroxide to reach a pre-determined pH, such as for example, 8.2, 8.5, or 8.7, based on the original pH of the FB sample. The concentration of acetic acid in each FB sample, either in its protonated (acetic acid) or deprotonated (sodium acetate) form is determined by reacting a small volume of the FB sample with reagents included with the Megazyme^{®} K-ACETRM acetic acid test kit, according to instructions included with the kit.

It is expected that the pH of the bright beer is approximately 4.0, and that the pH of the NMB samples is within 0.25 pH units of each of the pH targets-6.0, 7.0, and 8.0, respectively. Additionally, it is expected that the titratable acidity of the bright beer is greater than 1.00 g/L, and particularly greater than 2.00 g/L, while the titratable acidity of each of the NMB samples exhibits at least an 80% decrease relative to the titratable acidity of the bright beer. The extent of neutralization, exhibited by the titratable acidity of each of the NMB samples, is expected to increase as a function of the pH of the sample, with the NMB that is neutralized to a pH of 8.0 having least titratable acidity relative to the other samples. Finally, it is expected that the total concentration of the protonated and deprotonated forms of acetic acid will decrease by at least 75% in each of the NMB FB samples, relative to the bright beer sample, with the greatest effect again being seen in the pH 8.0 FB sample. However, based on the actual pH of the NMB sample, the concentration of protonated acetic acid in each of the NMB samples is expected to be reduced by at least 95% relative to the bright beer sample.

### Example 3: Determination of the Taste Profile of NMBs

A study is conducted in accordance with embodiments of the present disclosure to determine the organoleptic effects caused by the neutralization and removal of acetic acid from a bright beer. Participants in a sensory panel trained to distinguish the taste of vinegar notes resulting from the presence of protonated acetic acid are asked to sample each of the NMBs produced in Example 1 and score them according to a Likert-type scale. Likert-like scales used in taste and smell evaluation can ask participants to assign a score from 0 to 5, where each score is particularly defined, often with no half scores allowed. With respect to vinegar notes in particular, a Likert-type scale can have the following definitions: 0 = no perceptible vinegar notes; 1 = a hint of vinegar notes are perceptible; 2 = vinegar notes are slightly perceptible; 3 = vinegar notes are slightly-moderately perceptible; 4 = vinegar notes are moderately perceptible; and 5 = vinegar notes are moderately-strongly perceptible.

It is expected that untreated bright beer, having a relatively high concentration of protonated acetic acid, will exhibit average taste scores indicating a slight-moderate to moderate perception of vinegar notes. Upon treatment with sodium hydroxide, the average taste score of each of the treated samples is expected to be reduced relative to the bright beer and exhibit the same relationship as the titratable acidity and acetic acid concentrations determined in Example 2 with respect to pH, in that the NMB with a pH of 8.0 has the greatest reduction in the perception of vinegar notes relative to the other NMB samples. It is also expected that least one of the treated NMBs, particularly the NMB treated to a pH of 8.0, has no perceptible vinegar notes.

## Claims

1. A refined beer, the refined beer prepared from a bright beer comprising an organic acidic congener, having the following properties:
(i) a pH in the range of 5.5 to 8.5, preferably 5.8 to 6.5;
(ii) at least 10%, and up to 20%, by volume, ethyl alcohol; and
(iii) a combined concentration of acetic acid and acetate less than 1000 ppm, preferably in a range of 300 ppm to 400 ppm.

2. The refined beer according to Claim 1, wherein the refined beer has the following properties:
(i) a titratable acidity, relative to acetic acid, of less than about 0.5 grams per liter of the refined beer, preferably less than about 0.25 grams per liter; and
(ii) a protonated acetic acid concentration of less than about 100 parts per million, preferably less than about 50 parts per million, and more preferably less than 25 parts per million.

3. The refined beer according to either Claim 1 or 2, wherein the refined beer comprises gluten in a range of up to 20 ppm of gluten, and preferably comprises 0 ppm of gluten.

4. The refined beer according to any of Claims 1-3, wherein the refined beer is a colorless, flavorless, and/or odorless neutral malt base.

5. Use of the refined beer according to any of Claims 1-4 to produce a flavored malt beverage.

## Patentansprüche

1. Aufbereitetes Bier, wobei das aufbereitete Bier aus einem blanken Bier zubereitet wird, das ein organisches saures Kongener aufweist, mit den nachfolgenden Eigenschaften:
(i) einen pH-Wert im Bereich von 5,5 bis 8,5, vorzugsweise 5,8 bis 6,5;
(ii) mindestens 10 Volumen-% und bis zu 20 Volumen-% Ethylalkohol; und
(iii) eine kombinierte Konzentration aus Essigsäure und Acetat von weniger als 1000 ppm, vorzugsweise in einem Bereich von 300 ppm bis 400 ppm.

2. Aufbereitetes Bier nach Anspruch 1, wobei das aufbereitete Bier die nachfolgenden Eigenschaften aufweist:
(i) eine titrierbare Acidität, bezogen auf Essigsäure, von weniger als etwa 0,5 Gramm pro Liter des aufbereiteten Biers, vorzugsweise weniger als etwa 0,25 Gramm pro Liter; und
(ii) eine Konzentration an protonierter Essigsäure von weniger als etwa 100 Anteilen pro Million, vorzugsweise weniger als etwa 50 Anteilen pro Million, und noch bevorzugter weniger als 25 Anteilen pro Million.

3. Aufbereitetes Bier nach einem der Ansprüche 1 oder 2, wobei das aufbereitete Bier Gluten in einem Bereich von bis zu 20 ppm aufweist und bevorzugt 0 ppm Gluten aufweist.

4. Aufbereitetes Bier nach einem der Ansprüche 1 bis 3, wobei das aufbereitete Bier eine farblose, geschmacklose und/oder geruchlose neutrale Malzbasis ist.

5. Verwendung des aufbereiteten Biers nach einem der Ansprüche 1 bis 4, um ein aromatisiertes Malzgetränk herzustellen.

## Revendications

1. Bière raffinée, la bière raffinée étant préparée à partir d'une bière filtrée comprenant un congénère d'acide organique, présentant les propriétés suivantes :
(i) un pH dans l'intervalle de 5,5 à 8,5, de préférence 5,8 à 6,5 ;
(ii) au moins 10 %, et jusqu'à 20 %, en volume, d'alcool éthylique ; et
(iii) une concentration combinée d'acide acétique et d'acétate inférieure à 1 000 ppm, de préférence dans un intervalle de 300 ppm à 400 ppm.

2. Bière raffinée selon la revendication 1, dans laquelle la bière raffinée présente les propriétés suivantes :
(i) une acidité titrable, par rapport à l'acide acétique, inférieure à environ 0,5 gramme par litre de la bière raffinée, de préférence inférieure à environ 0,25 gramme par litre ; et
(ii) une concentration en acide acétique protoné inférieure à environ 100 parties par million, de préférence inférieure à environ 50 parties par million, et encore mieux inférieure à 25 parties par million.

3. Bière raffinée selon la revendication 1 ou 2, dans laquelle la bière raffinée comprend du gluten dans un intervalle jusqu'à 20 ppm de gluten, et de préférence comprend 0 ppm de gluten.

4. Bière raffinée selon l'une quelconque des revendications 1-3, dans laquelle la bière raffinée est une base de malt neutre sans couleur, sans arôme, et/ou sans odeur.

5. Utilisation de la bière raffinée selon l'une quelconque des revendications 1-4 pour produire une boisson au malt aromatisée.
